# EUROPÄISCHE PATENTANMELDUNG

(11) **EP 1 544 616 A1**
(43) Veröffentlichungstag der Anmeldung: **22.06.2005**
(21) Anmeldenummer: 04027047.2
(22) Anmeldetag: 13.11.2004
(51) Int. Cl.: G01N 33/52, G01N 9/00

(54) **Verfahren und Prüfmittel zur Erfassung der Dichteverhältnisse von Elektrolyten in Lösung**

(30) Priorität: 19.12.2003 DE 10359715
(71) Anmelder: Analyticon Biotechnologies AG, 35104 Lichtenfels (DE)
(72) Erfinder: Meisegeier, Bernhard, Dr., 97209 Veitshöchheim (DE); Siekmann, Werner, Dr., 35104 Lichtenfels (DE)

(57) **Zusammenfassung**

Biochemie, Medizin, analytisches Verfahren, Prüfmittel, Körperflüssigkeiten, Nachweis
1. Prüfmittel zur Erfassung der Dichteverhältnisse oder der Aktivitätsverhältnisse von Elektrolyten in Lösungen.
2. Gegenstand der Erfindung ist ein Verfahren zur Erfassung der Dichteverhältnisse oder der Aktivitätsverhältnisse von Elektrolyten in Lösungen durch Inkontaktbringen der Flüssigkeit mit einem geeignetem Reagenz und Auswertung der angezeigten Farbänderung und ein Reagenz zu dessen Ausführung. Das Reagenz enthält einen Ampholyt mit oder ohne Peptidbindung, Salze und organische Farbstoffe bzw. einen Ampholyt mit oder ohne Peptidbindung, Salze, organische Farbstoffe und eine Invertseife.

## Beschreibung

Die Erfindung betrifft ein Verfahren zur Erfassung der Dichteverhältnisse bzw. der Aktivitätsverhältnisse von Elektrolyten in wäßrigen Flüssigkeiten sowie ein Mittel zu dessen Ausführung.

### Charakteristik des Standes der Technik

Die Dichte von Flüssigkeiten läßt sich mit unterschiedlichen Mitteln und physikalischen Methoden wie mit Pyknometern, Aräometern, Refraktometern oder nach der Auftriebsmethode mit einer hydrostatischen Waage oder mit der Mohrschen Waage ermitteln. Die Dichte läßt sich mit solchen Methoden mit guter Genauigkeit bestimmen, jedoch sind hierfür bestimmte Geräte und kostenintensive Kalibrierungs- und

Temperierungsarbeiten erforderlich. Die heutigen Anstrengungen gehen dahin, mit einfacheren Methoden zu gleichwertigen Aussagen zu kommen. Diesem Bedürfnis entspringt die Entwicklung von Schnelltests für die klinische Diagnostik, mit denen dem Arzt und seinen Mitarbeitern in Praxis und Klinik ein unkompliziertes, zu raschen Ergebnissen führendes, zuverlässiges Hilfsmittel bereitgestellt werden soll.

Die Ermittlung des spezifischen Gewichtes mittels Teststreifen ist aufgrund der visuellen Auswertung einfach, kostengünstig und zeitsparend. Außerdem gestattet die Kombination mehrerer Testfelder auf einen Streifen eine rationelle Vorfelddiagnostik. Die Routineuntersuchung des Harns mit Multiparameter-Teststreifen gestattet die Erfassung des kompletten chemischen Urinstatus und stellt so einen ersten Schritt zur Diagnose verschiedener Krankheiten dar.

In der US-A-4,318,709 und der korrespondierenden DE-A-29 44 980 wird ein Verfahren zur Bestimmung des spezifischen Gewichtes bzw. der Ionenstärke beschrieben, indem die Probe mit einem Reagenz reagiert, das sich aus schwach sauren oder schwach basischen, zu mindestens 50% neutralisierten Polyelektrolyten und einem Indikator zusammensetzt.

In dem in der EP-A-0 114 315 beschriebenen Verfahren dienen ein schwach basischer Polyelektrolytpolymer, der durch eine starke organische Säure neutralisiert wird und ein Indikator als Reagenz.

Das in der EP-A-0 023 631 aufgeführte Reagenz setzt sich aus einem stark sauren oder stark basischen Polyelektrolytpolymer, einer Puffersubstanz und einem pH-Indikator zusammen.

In der EP 0 513 564 wird ein Verfahren offenbart, in dem sich das Reagenz aus gepuffertem Reagenz, Detergenz und einem pH-indikator zusammensetzt.

Im Verfahren der EP 0 349 934 werden statt Polyelektrolytpolymere mindest eine pH-Puffersubstanz und/oder ein Komplexbildner und ein pH-Indikator verwendet.

Auch aus der US 4,376,827 ist ein Verfahren bekannt, in dem stark saure oder stark basische Polyelektrolytpolymere, Puffersubstanzen und ein Indikator als Reagenz verwendet werden.

Verfahren, die auf Reagenzien basieren, die Polyelektrolytpolymere enthalten, haben den Nachteil, daß die durch den pH-Sprung hervorgerufene Farbe innerhalb kurzer Zeit rasch Änderungen unterworfen ist.

Das hat zur Folge, daß sich Ergebnisse, die nach einer Minute ermittelt wurden, stark von denen unterscheiden können, die nach zwei oder mehr Minuten abgelesen wurden.

Wenn demzufolge der Test von nicht speziell dafür ausgebildeten Personen, z.B. einem beliebigen Patienten ausgeführt wird, und die Ablesung nicht immer zur gleichen, vom Hersteller des Streifens vorgegebenen Zeit erfolgt, kann folgenschwer der Gesundheitszustand fehlinterpretiert werden.

### Ziel der Erfindung

Der Erfindung lag daher die Aufgabe zugrunde, ein Verfahren zur Ermittlung der lonenstärke bzw. der Dichteverhältnisse einer wäßrigen Flüssigkeit zur Verfügung zu stellen, das Ergebnisse liefert, die während der Testdurchführung über längere Zeit hinweg konstant bleiben und daß entsprechend dem Verfahren hergestellte Teststreifen schnelle und zuverlässige Aussagen über pathologische Veränderungen im Urin ermöglichen

### Darlegung des Wesens der Erfindung

Die Aufgabe wird gelöst von dem erfindungsgemäßen Verfahren zur Ermittlung der lonenstärke bzw. der Dichteverhältnisse einer wäßrigen Flüssigkeit durch Inkontaktbringen der Flüssigkeit mit einem geeigneten Reagenz und Auswertung der Farbänderung, dadurch gekennzeichnet, daß das Reagenz einen Ampholyt mit oder ohne Peptidbindung , Salze und organische Farbstoffe bzw. einen Ampholyt mit oder ohne Peptidbindung, Salze, organische Farbstoffe und eine Invertseife enthält.

Überraschenderweise wurde gefunden, daß durch Zusatz von Ampholyten zu den dem Fachmann an und für sich bekannten Indikatoren und verwendeten Substanzen und Puffersalzen, die in einer Konzentration von 50 - 300 mmol/l eingesetzt werden und einen pH-Wert von 6,8 bis 8,2, vorzugsweise 7 bis 7,6 ergeben oder durch Zusatz eines Ampholyten und einer Invertseife mit Brönsted Säurecharakter, die in einer Konzentration von 0,1 bis 3 % Gewichtsprozente (w/v) eingesetzt wird, zu den dem Fachmann an und für sich bekannten Indikatoren und verwendeten Substanzen und Puffersalzen, die in einer Konzentration von 50 - 300 mmol/l eingesetzt werden und einen pH-Wert von 6,8 bis 8,2, vorzugsweise 7 bis 7,6 ergeben und durch weiteren Zusatz von Farbstoffen, die im relevanten Bereich keinen Farbänderungen unterliegen, Reagenzien erhalten werden, mit denen bei Änderungen der lonenstärke bzw. der Dichteverhältnisse direkt Farbänderungen erzielt werden, die sich durch hohe Farbbrillanz und sehr feine Farbabstufungen in Abhängigkeit der Änderungen der Dichte und der Ionenstärke auszeichnen.

Das Reagenz enthält als Indikator vorzugsweise Thymolsulfophthalein oder Dibromthymolsulfophthalein. Bevorzugte Konzentrationen des Indikators im zum Imprägnieren verwendeten Reagenz sind 1 - 50 mmol/l, vorteilhaft 2 - 20 mmol/l.

Als Ampholyt ohne Peptidbindung wird eine Verbindung der allgemeinen Formel I und als Ampholyt mit Peptidbindung wird eine Verbindung der allgemeinen Formel II ausgewählt ,

H₂N-CH(R)-CO-OH I

H₂N-CH(R₁)-CO-[NH-CH(R₂)-CO]ₙ-NH-CH(R₃)-COOH II

in der R einen aliphatischen Rest Cₙ₌₃₋₅, Hₙ₌₅₋₁₀, N_{n=1-3,} Oₙ₌₀₋₂ oder einen Alkylrest oder eine methylsubstituierte heterocyclische Verbindung Cₙ₌₃₋₅, Hₙ₌₄₋₆, Nₙ₌₁₋₃ darstellen und n den Wert von 0 bis 5000, vorzugsweise von 0 bis 500 annehmen kann und R1, R2, R3 gleich oder verschieden sind und vorzugsweise einen aliphatischen Rest Cₙ₌₃₋₅, Hₙ₌₅₋₁₀, Nₙ₌₁₋₃, Oₙ₌₀₋₂ oder eine methylsubstituierte heterocyclische Verbindung Cₙ₌₃₋₅, Hₙ₌₄₋₆, Nₙ₌₁₋₃ darstellen, aber auch einen substituierten oder nichtsubstituierten Benzylring oder einen Alkylrest annehmen kann.. Der Ampholyt wird in einer bevorzugten Konzentration von 0,2 bis 20 mmol/l, vorteilhaft von 0,5 bis 10 mmol/l eingesetzt.

Zur Verbesserung der Farbbrillanz und zwecks Erreichen guter Farbabstufungen können Farbstoffe, vorzugsweise Tropäolin-Farbstoff, der in einer bevorzugten Konzentration von 0,05 bis 20 mmol/l eingesetzt wird und dessen Eigenschaften beispielsweise in Römpp Chemie Lexikon, Georg Thieme Verlag 1995, Stichwort "Tropäolin" beschrieben sind, zugesetzt werden.

Das erfindungsgemäße Reagenz ist vorzugsweise auf einem saugfähigen Träger imprägniert.

Das Reagenz kann weiterhin dem Fachmann bekannte Zusatzstoffe wie beispielsweise Stabilisatoren, Netzmittel oder Quellmittel enthalten.

Die bevorzugte Ausführungsform des Verfahrens ist die, daß auf einem Teststreifen ein Testfeld aufgebracht wird, das mit einer Lösung des Reagenz getränkt und getrocknet wurde. Das Testfeld wird mit dem zu untersuchenden Harn in Kontakt gebracht, zum Beispiel durch Eintauchen des Streifens in Harn und

Herausnahme nach wenigen ( ca. 1-3) Sekunden. Die Farbe die das Testfeld angenommen hat, wird mit einer Farbskala verglichen, die dem Teststreifen beiliegt. Jeder Farbe der Skala ist dabei ein Wert für ein spezifisches Gewicht zugeordnet.

In einer im allgemeinen bevorzugten Ausführungsform befindet sich das Testfeld auf einen Multiparameter-Teststreifen.

Alternativ zur visuellen Auswertung kann das Testfeld in einem Instrument , wie es z.B. unter dem Namen "CombiScan" (Analyticon Biotechnologies AG, Lichtenfels, Deutschland) bekannt ist, reflexionsfotometrisch gemessen werden.

Die Auswertung im erfindungsgemäßen Verfahren kann auf an und für sich bekannte Art und Weise mittels einer Eichkurve erfolgen. Während im Falle der visuellen Auswertung beispielsweise eine Farbskala als Eichkurve verwandt werden kann, können in der Auswertung mit dem Gerät Remissionswerte Grundlage für die Erstellung der Eichkurve sein.

Die Auswertung einer Bestimmung nach dem erfindungsgemäßen Verfahren ist bereits nach 30 Sekunden möglich, die entstandene Farbe bleibt über einen langen Zeitraum von mindestens 15 Minuten bestehen, so daß bei größeren Meßreihen, die sich über einen längeren Zeitraum hinziehen, direkte Vergleiche der Ergebnisse möglich sind.

### Ausführungsbeispiele

### Beispiel 1

Papier der Sartorius group Spezialpapier Filtrak GmbH ( BF2) wird mit folgender Lösung imprägniert und im Luftstrom getrocknet:

In 900 ml Phosphatpuffer [Dinatrium hydrogenphosphatlösung (0,2 mol/l) mit Natriumhydrogenphosphatlösung (0,2 mol/l) auf pH 7,5 eingestellt] werden 0,579 g C₂₁ H₃₀N₈O₄.2C₂H₄O₂ gelöst und 100 ml einer methanolischen Lösung, die 2,496 g Dibromthymolsulfophthalein und 5,6 mmol Tropäolin C₁₆H₁₁ N₂NaO₄S enthält, zugegeben.

Auf einen flexiblen Plastikträger werden 5 x 5 mm große Quadrate des Testpapiers aufgeklebt, die nach Eintauchen in Urine mit unterschiedlicher Dichte visuelle und reflexionsfotometrisch ausgewertet werden können.

### Beispiel 2

Papier der Sartorius group Spezialpapier Filtrak GmbH ( BF2) wird mit folgender Lösung imprägniert und getrocknet:

In 900 ml Phosphatpuffer [Dinatrium hydrogenphosphatlösung (0,2 mol/l) mit Natriumhydrogenphosphatlösung (0,2 mol/l) auf pH 7,5 eingestellt] werden 0,604 g C₁₂H₂₆N₆O₃ (freie Base) und 5,01 g Invertseife CH₃(CH₂)₁₅P[(CH₂)₃CH₃]₃Br gelöst und 100 ml einer methanolischen Lösung, die 2,496 g Dibromthymolsulfophthalein C₂₇H₂₈Br₂O₅S und 5,6 mmol Tropäolin C₁₆H₁₁N₂NaO₄S enthält, zugegeben.

Auf einen flexiblen Plastikträger werden 5 x 5 mm große Quadrate des Testpapiers aufgeklebt, die nach Eintauchen in Urine mit unterschiedlicher Dichte visuelle und reflexionsfotometrisch ausgewertet werden können.

### Beispiel 3

Papier der Sartorius group Spezialpapier Filtrak GmbH ( BF2) wird mit folgender Lösung imprägniert und getrocknet:

In 900 ml Phosphatpuffer [Dinatrium hydrogenphosphatlösung (0,2 mol/l) mit Natriumhydrogenphosphatlösung (0,2 mol/l) auf pH 7,5 eingestellt] werden 0,604 g C₁₂H₂₆N₆O₃ (freie Base) und 4,4 g C₂₇H₅₀NCl.H₂O gelöst und 100 ml einer methanolischen Lösung, die 2,496 g Dibromthymolsulfophthalein und 5,6 mmol Tropäolin C₁₆H₁₁N₂NaO₄S enthält, zugegeben. Auf einen flexiblen Plastikträger werden 5 x 5 mm große Quadrate des Testpapiers aufgeklebt, die nach Eintauchen in Urine mit unterschiedlicher Dichte visuelle und reflexionsfotometrisch ausgewertet werden können. Kochsalzlösung unterschiedlichen spezifischen Gewichtes

| spezifisches Gewicht | Reaktionsfarbe | Remissionswert (Mittelwert von 20 Messungen) |
|---|---|---|
| 1,000 | blaugrün | 6 |
| 1,005 | bläulich-resedagrün | 12 |
| 1,010 | schilfgrün | 17 |
| 1,015 | olivgrün | 24 |
| 1,020 | currygelb | 29 |
| 1,025 | ocker | 35 |
| 1,030 | hellocker | 39 |

### Beispiel 2

Papier der Sartorius group Spezialpapier Filtrak GmbH ( BF2) wird mit folgender Lösung imprägniert und im Luftstrom getrocknet:

In 900 ml Phosphatpuffer [Dinatrium hydrogenphosphatlösung (0,2 mol/l) mit Natriumhydrogenphosphatlösung (0,2 mol/l) auf pH 7,5 eingestellt] werden 0,604 g C₁₂H₂₆N₆O₃ (freie Base) und 4,4 g Invertseife C₆H₅CH₂N[(CH₂)₁₇CH₃]CH₃)₂Cl.H₂O gelöst und 100 ml einer methanolischen Lösung, die 2,496 g Dibromthymolsulfophthalein C₂₇H₂₈Br₂O₅S und 5,6 mmol Tropäolin C₁₆H₁₁N₂NaO₄S enthält, zugegeben.

Auf einen flexiblen Plastikträger werden 5 x 5 mm große Quadrate des Testpapier aufgeklebt, die nach Eintauchen in Urine mit unterschiedlicher Dichte visuelle und reflexionsfotometrisch ausgewertet werden können.

## Patentansprüche

1. Verfahren zur Ermittlung der Ionenstärke bzw. der Dichteverhältnisse einer wäßrigen Flüssigkeit durch Inkontaktbringen der Flüssigkeit mit einem geeigneten Reagenz und Auswertung der Farbänderung, **dadurch gekennzeichnet, daß** das Reagenz einen Ampholyt mit oder ohne Peptidbindung , Salze und organische Farbstoffe bzw. einen Ampholyt mit oder ohne Peptidbindung, Salze, organische Farbstoffe und eine Invertseife enthält.

2. Verfahren nach Anspruch 1, **dadurch gekennzeichnet, daß** als Ampholyt ohne Peptidbindung eine Verbindung der allgemeinen Formel I und als Ampholyt mit Peptidbindung eine Verbindung der allgemeinen Formel II ausgewählt wird,
H₂N-CH(R)-CO-OH I
H₂N-CH(R₁)-CO-[NH-CH(R₂)-CO]ₙ-NH-CH(R₃)-COOH II
in der R einen aliphatischen Rest Cₙ₌₃₋₅, Hₙ₌₅₋₁₀, Nₙ₌₁₋₃, Oₙ₌₀₋₂ oder einen Alkylrest oder eine methylsubstituierte heterocyclische Verbindung Cₙ₌₃₋₅, Hₙ₌₄₋₆, Nₙ₌₁₋₃ darstellen und n den Wert von 0 bis 5000, vorzugsweise von 0 bis 500 annehmen kann und R1, R2, R3 gleich oder verschieden sind und vorzugsweise einen aliphatischen Rest Cₙ₌₃₋₅, Hₙ₌₅₋₁₀, Nₙ₌₁₋₃, Oₙ₌₀₋₂ oder eine methylsubstituierte heterocyclische Verbindung Cₙ₌₃₋₅, Hₙ₌₄₋₆, Nₙ₌₁₋₃ darstellen, aber auch einen substituierten oder nichtsubstituierten Benzylring oder einen Alkylrest annehmen kann..

3. Verfahren nach Anspruch 1, **dadurch gekennzeichnet, daß** die organischen Farbstoffe aus einer farbändernden Substanz, die bei Änderung der Dichte oder der Ionenstärke ihre Farbe ändert und einem Farbstoff, der im relevanten Bereich seine Farbe nicht ändert, bestehen.

4. Verfahren nach Anspruch 1 bis 3, **dadurch gekennzeichnet, daß** das Reagenz auf einem saugfähigen Träger imprägniert ist.

5. Reagenz zur Ermittlung der Ionenstärke bzw. der Dichteverhältnisse einer wäßrigen Flüssigkeit, **dadurch gekennzeichnet, daß** es einen Ampholyt mit oder ohne Peptidbindung , Salze und organische Farbstoffe bzw. einen Ampholyt mit oder ohne Peptidbindung, Salze, organische Farbstoffe und eine Invertseife enthält.

6. Verfahren nach Anspruch 5, **dadurch gekennzeichnet, daß** als Ampholyt ohne Peptidbindung eine Verbindung der allgemeinen Formel I und als Ampholyt mit Peptidbindung eine Verbindung der allgemeinen Formel II ausgewählt wird, wie unter Anspruch 2 formuliert.

7. Reagenz nach Anspruch 5, **dadurch gekennzeichnet, daß** die organischen Farbstoffe aus einer farbändernden Substanz, die bei Änderung der Dichte oder der Ionenstärke ihre Farbe ändert, und einem Farbstoff, der im relevanten Bereich seine Farbe nicht ändert, bestehen.

8. Teststreifen zur Ermittlung der Ionenstärke bzw. der Dichteverhältnisse einer wäßrigen Flüssigkeit aus einem Kunststoffstreifen, der mit einem Reagenz nach Anspruch 1 imprägnierten saugfähigen Träger verbunden ist.
